(19) Europäisches Patentamt

European Patent Office

Office européen des brevets

(11) Veröffentlichungsnummer : **0 345 268 B1**

## (12) EUROPÄISCHE PATENTSCHRIFT

(45) Veröffentlichungstag der Patentschrift :
**02.01.92 Patentblatt 92/01**

(51) Int. Cl.$^5$ : **B62B 13/16**

(21) Anmeldenummer : **88901015.3**

(22) Anmeldetag : **21.01.88**

(86) Internationale Anmeldenummer :
**PCT/DE88/00028**

(87) Internationale Veröffentlichungsnummer :
**WO 88/05740 11.08.88 Gazette 88/18**

(54) **ZUSAMMENKLAPPBARER RODELSCHLITTEN.**

(30) Priorität : **28.01.87 DE 3702519**

(43) Veröffentlichungstag der Anmeldung :
**13.12.89 Patentblatt 89/50**

(45) Bekanntmachung des Hinweises auf die
Patenterteilung :
**02.01.92 Patentblatt 92/01**

(84) Benannte Vertragsstaaten :
**AT CH FR IT LI**

(56) Entgegenhaltungen :
**DE-C- 349 720**

(56) Entgegenhaltungen :
**DE-C- 405 219**
**DE-C- 454 094**
**DE-C- 460 061**
**GB-A- 1 004 135**

(73) Patentinhaber : **SCHEIB, Rudi**
**Johannes-Weisser-Weg 8**
**W-7900 Ulm-Donau (DE)**

(72) Erfinder : **SCHEIB, Rudi**
**Johannes-Weisser-Weg 8**
**W-7900 Ulm-Donau (DE)**

(74) Vertreter : **Haft, Berngruber, Czybulka**
**Hans-Sachs-Strasse 5**
**W-8000 München 5 (DE)**

EP 0 345 268 B1

## Beschreibung

Die Erfindung bezieht sich auf einen zusammenklappbaren Rodelschlitten gemäß dem Oberbegriff des Patentanspruches 1.

Ein solcher Schlitten ist aus der schweizer Patentschrift 59 036 bekannt. Zwischen den Kufenhörnern ist ein Querrohr angeordnet, in dem eine Schraubenfeder gelegen ist. An deren Enden sind Stifte vorgesehen, die jeweils in Längsschlitze von je zu zweien scherenartig zueinander angeordneten und an Beschlägen der Kufenhörner angelenkten Streben eingreifen. Das Querrohr stützt sich seinerseits direkt auf den Kufenhörnern ab, ohne mit diesen jedoch verbunden zu sein.

Durch diese Konstruktion ist es möglich, durch Zug an jeweils einem Kufenhorn die Winkelstellung der Kufen an den Kreuzgelenken zu verändern, wodurch der Schlitten gelenkt werden kann. Nach dem Ende des Lenkmanövers wird der Zug an dem jeweiligen Kufenhorn aufgehoben, wonach mit Hilfe der Feder in dem Querrohr und der gelenkigen Verbindung der Streben die Kufen wieder in die normale Stellung für eine Geradeausfahrt gebracht werden.

Zum Zusammenlegen dieses Schlittens wird ein Beschlag an einem Kufenhorn, an dem die Streben angelenkt sind und auf dem sich das Querrohr abstützt, durch Lösen von Haken geöffnet, wonach das gesamte Querrohr um das andere Kufenhorn geschwenkt werden kann. Anschließend wird der Schlitten durch Schließen der Kreuzgelenke zusammengeklappt.

Die Verbindung zwischen den beiden Kufenhörnern ist konstruktiv aufwendig und gibt zudem dem Schlitten nicht die für eine sichere Fahrt erwünschte Steifigkeit. Schon ein geringes Spiel zwischen den Kufenhörnern und den Beschlägen, ein Spiel im Bereich der gelenkigen Verbindung zwischen den Beschlägen und den gelenkigen Streben und insbesondere das notwendige Spiel zwischen dem Querrohr und den Beschlägen im Bereich der freien Abstützung des Querrohres vermindert die Stabilität des Klappschlittens, die im wesentlichen dann nur durch die Steifigkeit der Kreuzgelenkverbindungen bestimmt wird, und verursacht auch beim Geradeausfahren ein Flattern der Kufen, so daß nur eine geringe Führungsstabilität vorliegt.

Der Erfindung liegt die Aufgabe zugrunde, einen zusammenklappbaren Rodelschlitten der in Rede stehenden Art anzugeben, der eine einfache Konstruktion mit hoher Eigenstabilität und Verwindungssteifigkeit aufweist, gute Fahreigenschaften zeigt und der zudem ohne komplizierte Handgriffe zusammengeklappt werden kann.

Diese Aufgabe ist gemäß der Erfindung durch die im kennzeichnenden Teil des Patentanspruches 1 angegebenen Merkmale gelöst. Demgemäß werden die Kufenhörner jeweils zu bereits vorhandenen Teilen des Rodelschlittens, entweder den Sitzholmen oder dem jeweilig anderen Kufenhorn geführt bzw. dort in Anlage gebracht, und dort mit diesem anderen Teil verbunden. Zusätzliche Streben oder komplizierte Verbindungsvorrichtungen für die Arretierung des Schlittens im Fahrzustand sind daher nicht notwendig. Die Eigenstabilität und die Verwindungssteifigkeit im ausgeklappten Fahrzustand sind sehr hoch, insbesondere deswegen, weil die Festpunkte des Schlittens, an denen unterschiedliche Teile miteinander verbunden sind, jeweils in Dreieckskonstruktionen liegen. Insbesondere bei der Zusammenführung der Kufenhörner und deren Verbindung wird bereits durch einen einzigen Verbindungspunkt eine sehr steife Konstruktion erreicht. Außerdem werden die Kufen in ihrer Lage stabil gehalten, so daß in allen Fahrzuständen der Schlitten eine hohe Führungsstabilität aufweist.

Auch das Zusammenklappen des Schlittens ist sehr einfach. Im Falle, daß die Kufenhörner zusammengeführt und an der höchsten Stelle gelenkig miteinander verbunden sind, braucht überhaupt keine Verbindungsvorrichtung gelöst zu werden. Der Schlitten wird einfach scherenartig zusammengeklappt, wobei die gelenkige Verbindung an den höchsten Stellen der Kufenhörner diesem Vorgang zwanglos folgt. Werden die Kufenhörner mit den Sitzholmen allein verbunden, so braucht an diesen Stellen nur ein einfacher, z.B. federgestützter Riegelbolzen gezogen werden, wonach der Schlitten scherenartig zusammengeklappt werden kann.

In jedem Falle ist die Anzahl der für das Halten des Schlittens im Fahrzustand notwendigen Verbindungspunkte nur gering: Im einfachsten Falle ist lediglich ein Verbindungspunkt in Form eines Gelenkes zwischen den zusammengeführten Kufenhörnern notwendig. Eine weitere Variante besteht in zwei lösbaren Verbindungen zwischen Kufenhörnern und Sitzholmen. Beide Konstruktionen können kombiniert werden, so daß dann drei Verbindungspunkte vorhanden sind, wobei jedoch nur die beiden Verbindungspunkte zwischen Kufenhörnern und Sitzholmen für das Zusammenklappen gelöst werden müssen.

Die Gelenkachse der Verbindung der Kufenhörner braucht im übrigen nicht mit der Gelenkachse der Kreuzgelenke zusammenfallen. Sie kann niedriger als diese oder vorzugsweise bei einer Ausführungsform als Hörnerschlitten höher als die Kreuzgelenkachse liegen, ist jedoch in allen Fällen parallel zu dieser.

Es ist zwar auch der österreichischen Patentschrift 166 084 ein zusammenklappbarer Rodelschlitten bekannt, bei dem die Sitzholme und Kufen durch Verbindungsstreben miteinander befestigt sind, wobei zwischen zwei gegenüberliegenden Verbindungsstreben jeweils ein Klappgelenk angeordnet ist. Die Sitzholme und die Kufen sind im vorderen Bereich des Schlittens zu Stütznasen geführt, die mit Hilfe eines Scharnieres klappbar sind. Im hinteren Bereich des Schlittens sind ebensolche Stütznasen mit einem Scharnier vorgesehen, wobei mit diesen Stütznasen die beiden Sitzholme und zwei hintere Streben verbunden sind, die von den Kufen des Schlittens ausgehen. Da die Sitzholme sowohl im vorderen Bereich als auch im hinteren Bereich relativ eng zusammengeführt werden müssen, um mit den Stütznasen und dem Scharnier verbunden werden zu können, ergibt sich eine nur relativ schmale Sitzfläche. Des weiteren ist insbesondere die Scharnierverbindung im hinteren Bereich des Schlittens problematisch. Diese liegt notgedrungen höher als die Sitzfläche. Aus der Zeichnung könnte zwar entnommen werden, daß die Absicht bestand, die beiden hinteren Stütznasen mit den hochgeführten Teilen der Sitzholme als Anlagefläche für den Rücken eines Fahrers auszugestalten, jedoch kann diese Anlagefläche nur relativ schmal sein, damit der Schlitten im zusammengeklappten Zustand nur einen kleinen Stauraum benötigt. Bei schnellen Schlittenabfahrten ist es jedoch nicht ungewöhnlich, daß der Fahrer beim Überfahren von Buckeln auf der Abfahrpiste von der Sitzfläche abgehoben wird und anschließend unsanft mit dem Gesäß auf die Stütznasen aufschlägt. Dies kann nicht nur schmerzhaft sein, sondern beinhaltet auch ein erhöhtes Verletzungsrisiko.

Des weiteren ist auch die Konstruktion im Bereich der Verbindung zwischen Kufenhörnern und Sitzholmen mit den Stütznasen aufwendig, wenn eine hohe Steifigkeit des Schlittens gefordert wird. Außerdem müssen in diesen Bereichen mindestens zwei feste Scharniere vorgesehen sein.

Die bei diesem bekannten Schlitten erwähnten Nachteile treten jedoch bei einem Rodelschlitten gemäß der Erfindung garnicht auf.

Weitere Ausgestaltungen der Erfindung gehen aus den Unteransprüchen hervor. Die Erfindung ist in Ausführungsbeispielen anhand der Zeichnung näher erläutert. In dieser stellen dar:

Figuren 1a, 1b bis 3a, 3b jeweils schematisch Seitenansichten bzw. Frontansichten verschiedener Ausführungsformen von Rodelschlitten gemäß der Erfindung, wobei in Figur 1c ein zusammengeklappter Schlitten in Frontansicht dargestellt ist;

Figur 4 eine teilweise geschnittene Rückansicht auf einen Rodelschlitten gemäß Figur 3 zur Darstellung eines Kreuzgelenkes zur Verbindung der Sitzholme und Kufen sowie der Schwenkverbindung der Kufenhörner;

Figur 5 einen Schnitt längs V-V in Figur 4;

Figur 6 eine weitere Ausführungsform der Schwenkverbindung der Kufenhörner;

Figur 7 eine schematische teilweise geschnittene Aufsicht auf eine Verbindung zwischen einem Sitzholm und einem Kufenhorn bei einem Rodelschlitten gemäß der Erfindung.

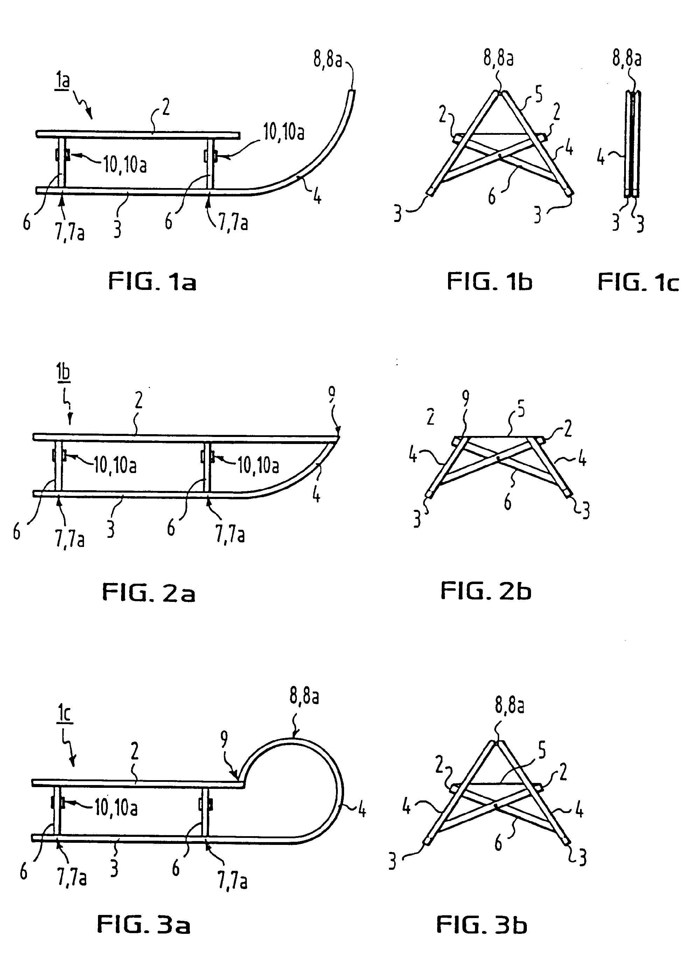

In den Figuren 1 bis 3 ist jeweils ein Rodelschlitten 1a, 1b bzw. 1c gezeigt, die sämtlich zwei Sitzholme 2 , zwei Kufen 3 , die im vorderen Bereich nach oben zu Kufenhörnern 4 gebogen sind, eine sich zwischen den Sitzholmen 2 erstreckende Sitzfläche 5, z.B. aus Textilgewebe, und zwei Kreuzgelenke 6 aufweisen, die im Bereich der Sitzfläche jeweils schräg gegenüberliegende Sitzholme 2 und Kufen 3 verbinden.

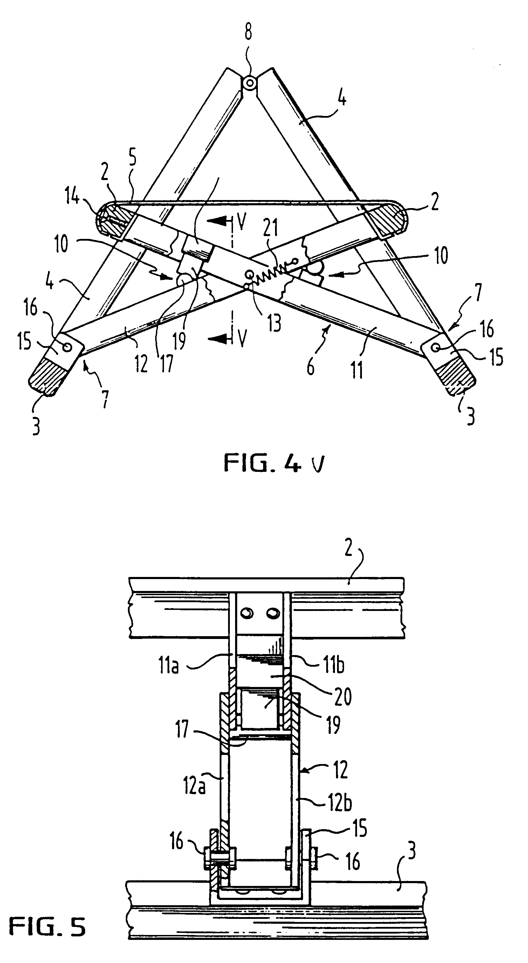

Die Arme der Kreuzgelenke 6 sind mit den Kufen 3 gelenkig verbunden. Eine Ausführungsform 7 für diese Gelenkverbindung ist in Figur 4 näher dargestellt. Diese und weitere Ausführungsformen können für sämtliche in den Figuren 1 bis 3 gezeigten Schlitten verwendet werden.

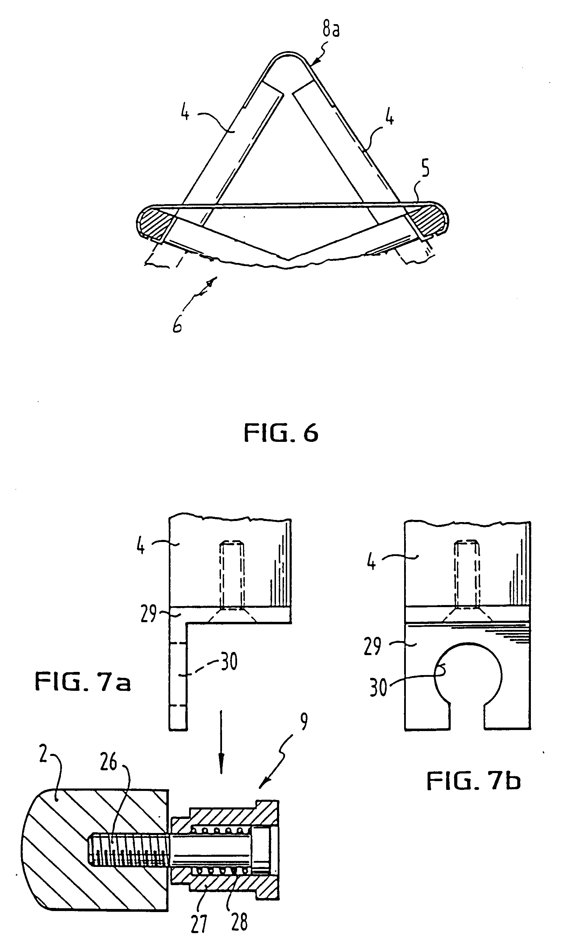

Die Kufenhörner 4 können wie bei den Schlitten gemäß den Figuren 1 und 3 zusammengeführt sein und im Berührungsbereich schwenkbar miteinander verbunden werden. Ausführungsformen 8 bzw. 8a für diese weitere Gelenkverbindung sind in den Figuren 4 bzw. 6 dargestellt.

Ferner können die Sitzholme 3 mit den Kufenhörnern arretiert werden, wie dieses für die Schlitten gemäß den Figuren 2 und 3 dargestellt ist. Eine Ausführungsform für eine Arretiervorrichtung 9 ist in der Figur 7 gezeigt.

Die Gelenkverbindung 8, 8a bzw. die Arretiervorrichtung 9 halten die Kufen 3 in den gezeigten Fahrstellungen der Schlitten trotz der gelenkigen Verbindung 7 in einer festen Lage.

Der Schlitten gemäß Figur 1 wird einfach dadurch zusammengeklappt, daß die Kufen 3 bzw. die Sitzholme 2 gegeneinandergedrückt werden. Die Kreuzgelenke 6 strecken sich dabei, die Sitzfläche 5 kann dieser Bewegung folgen, ebenso die Gelenkverbindung 8 bzw. 8a, deren Gelenkachse parallel zu derjenigen des Kreuzgelenkes ist. Der zusammengelegte Schlitten ist gemäß Figur 1c ein flaches Paket. Die Höhe der Kufenhörner ist beispielhaft. Diese brauchen nicht so hoch geführt zu werden.

Zum Zusammenklappen des Schlittens gemäß Figur 2 wird zunächst die Arretiervorrichtung 9 gelöst, anschließend werden die Kufen 3 bzw. Sitzholme 2 wie oben gegeneinander gedrückt. Auch hier erhält man ein flaches Paket mit geringem Stauraum.

Zum Zusammenklappen des Schlittens gemäß Figur 3 werden zunächst die Arretiervorrichtungen 9 gelöst, anschließend kann der Schlitten wiederum durch Zusammendrücken der Kufen 3 bzw. Sitzholme 2 zu einem flachen Paket gefaltet werden. Die Gelenkverbindung 8 bzw. 8a folgt zwanglos der Klappbewegung.

Wesentlich ist, daß für jeden Schlitten zumindest eine Fixierung der Kufen 3 in der Fahrstellung vorhanden ist. Die Schlitten gemäß den Figuren 1 und 2 haben jeweils eine solche Fixierung durch die Gelenkverbindung 8, 8a zwischen den Kufenhörnern an ihren nächsten Punkten bzw. die Arretiervorrichtung 9 zwischen Kufenhörnern 4 und in diesem Falle nach vorne verlängerten Sitzholmen 2. Der Schlitten gemäß Figur 3 hat zwei solche Fixierungen, nämlich einmal eine Fixierung der Kufenhörner 4 untereinander durch die Gelenkverbindung 8 bzw. 8a und jeweils eine Arretiervorrichtung 9 zu beiden Seiten des Schlittens zwischen einem Kufenhorn 4 und einem Sitzholm 2. Hierbei ist es durchaus möglich, eine der Fixierungen aufzutrennen.

Mit den Kreuzgelenken 6 können noch Federungen 10 für die Schlitten vorgesehen sein; eine Ausführungsform ist in Figur 4 dargestellt.

Wie in Figur 4 dargestellt besteht das Kreuzgelenk 6 aus zwei Armen 11 und 12, die mit einem Gelenkbolzen 13 miteinander verbunden sind. Die Arme 11 und 12 sind mit den Sitzholmen 2 starr verbunden, was in Figur 4 für den Gelenkarm 11 durch eine Schraube 14 angedeutet ist. Die Gelenkarme 11 und 12 bestehen in diesem Falle aus zwei parallelen Streben 11a, 11b bzw. 12a, 12b z.B. aus Stahl, Aluminium oder einem harten Kunststoff, wobei die Streben 12a und 12b im Bereich des Gelenkbolzens 13 die Streben 11a , 11b umgreifen, wie dieses schematisch in Figur 5 dargestellt ist.

Die Gelenkstreben 11 und 12 sind an den Kufen 3 jeweils mit einem an den Kufen befestigten Gabelstück 15 mit Hilfe von Gelenkbolzen 16 gelagert, wie dieses zudem schematisch in Figur 5 angegeben ist. Hierdurch wird die oben erwähnte Gelenkverbindung 7 zwischen Kreuzgelenk 6 und Kufen 3 gebildet.

Wie aus Figur 4 ersichtlich, sind die Kufenhörner 4 des Schlittens zusammengeführt und in der vertikalen Mittelebene mit einem Scharnier als Gelenkverbindung 8 verbunden. Die Scharnierachse ist parallel zu der Drehachse des Kreuzgelenkes 6 durch den Bolzen 13.

Bei der Ausführung eines Schlittens gemäß Figur 4 sieht man, daß die Innenkanten der Sitzholme 2 mit den Außenkanten der Kufenhörner 4 fluchten. Im Berührungsbereich könnte dann noch zusätzlich eine Arretierungsvorrichtung gemäß Figur 7 vorgesehen sein.

Für die Federung 10 des Schlittens sind mit dem Arm 12 des Kreuzgelenkes 6 zu beiden Seiten des Gelenkbolzens 13 zwei Stützstäbe 17 verbunden. Mit der Strebe 11 ist zu beiden Seiten des Gelenkbolzens 13 ein Polster aus elastischem Material , z.B. ein Gummipolster 19 verbunden, das auf einer Verbindungsplatte 20 zwischen den Streben 11a und 12b befestigt ist. Die Gummipolser 19 liegen an den Stützstäben 17 an.

Mit dem Arm 11 des Kreuzgelenkes ist unterhalb des Bolzens ein Ende einer Zugfeder 21 eingehängt, deren anderes Ende auf der jenseitigen Seite des Gelenkbolzens 13 oberhalb von diesem mit dem Arm 12 des Kreuzgelenkes 6 verbunden ist. Die Lage der Feder ist nicht symmetrisch zu der vertikalen Mittelebene des Schlittens. Sie ist so eingehängt, daß in der gezeigten Fahrstellung einem Zusammenklappen des Schlittens entgegengewirkt wird. Im zusammengeklappten Zustand des Schlittens wirkt die Feder einem Auseinanderklappen des Kreuzgelenkes ebenfalls entgegen. In Figur 5 ist aus Gründen der Übersichtlichkeit die Zugfeder 21 nicht dargestellt.

Die Gelenkverbindung der zusammengeführten Kufenhörner kann durch ein Federband 8a aus Stahl oder Kunststoff gebildet werden, das die Kufenhörner miteinander verbindet; vgl. Figur 6.

Eine mögliche Ausführungsform einer Arretierungsvorrichtung 9 zwischen Sitzholmen 2 und Kufenhörnern 4 ist in Figur 7 schematisch dargestellt. In jeden Sitzholm 2 ist ein nach innen weisender Gewindebolzen 26 eingeschraubt, auf den eine federgestützte Riegelhülse 17 aufgesetzt ist. Die Riegelhülse 27 kann gegen die Kraft einer Druckfeder 28 auf dem Gewindebolzen 26 gleitend in Richtung auf dessen freies Ende gezogen werden, so daß ein Stück des Riegelbolzens freiliegt. Hierauf wird eine mit dem Kufenhorn 4 verbundene Befestigungsplatte 29 geschoben, die eine nach unten offene Schlüssellochbohrung 30 aufweist. Wird die Riegelhülse 27 zurückgeschoben, so taucht diese in die zentrale größere Bohrung der Schlüssellochbohrung 30 ein und verriegelt das Kufenhorn 4 mit dem Sitzholm.

Im übrigen können die Verbindungen 7, 7a zwischen Kufen 3 und Kreuzgelenken 6 auch einstückige Verbindungen oder ähnliches aus elastischem Material, z.B. Gummi sein. Hier muß lediglich gewährleistet sein, daß die Kufen der Schwenkbewegung beim Zusammenbau und Zusammenklappen des Schlittens folgen können.

## Patentansprüche

1. Zusammenklappbarer Rodelschlitten mit zwei Kufen, die im Vorderbereich des Schlittens zu Kufenhörnern nach oben gebogen sind, mit zwei zu den Kufen parallelen Sitzholmen und einer Kreuzgelenkverbindung zwischen Sitzholmen und Kufen, wobei die Kufen mit den Enden der Kreuzgelenkverbindung schwenkbar verbunden sind und im Bereich der Kufenhörner eine Arretiervorrichtung zum Fixieren der Kufen in der Fahrstellung des Schlittens vorgesehen ist, dadurch gekennzeichnet, daß die Kufenhörner (4) an ihren höchsten Punkten zusammengeführt sind und/oder jedes Kufenhorn (4) direkt zu einem auf der gleichen Seite des Schlittens (1a, 1b, 1c) gelegenen Sitzholm (2) geführt ist, und daß dort die Arretiervorrichtung (8, 8a, 9) vorgesehen ist.

2. Schlitten nach Anspruch 1, dadurch gekennzeichnet, daß an der höchsten Stelle der zusammengeführten Kufenhörner (4) eine Gelenkverbindung (8, 8a) vorgesehen ist.

3. Schlitten nach Anspruch 2, dadurch gekennzeichnet, daß die Gelenkachse des Gelenks (8, 8a) zwischen den Kufenhörnern (4) oberhalb der Achse (13) der Kreuzgelenkverbindung (6) und parallel zu dieser liegt.

4. Schlitten nach Anspruch 2 oder 3, dadurch gekennzeichnet, daß das Gelenk zwischen den Kufenhörnern (4) ein Scharnier (8) ist.

5. Schlitten nach Anspruch 2 oder 3, dadurch gekennzeichnet, daß das Gelenk zwischen den Kufenhörnern (4) ein Federband (8a) ist.

6. Schlitten nach Anspruch 1, dadurch gekennzeichnet, daß die Arretiervorrichtung (9) zwischen Kufenhörnern (4) und Sitzholmen (2) eine lösbare Verbindung ist.

7. Schlitten nach Anspruch 6, dadurch gekennzeichnet, daß die Arretiervorrichtung (9) einen federgestützen Riegelbolzen (26, 27, 28) zwischen Kufenhörnern (4) und Sitzholmen (2) aufweist.

## Claims

1. A foldable luge having two runners bent upwardly into horns in the front area of the sled, two seat bars parallel to the runners, and a universal joint connection between the seat bars and the runners, the runners being pivoted to the ends of the universal joint connection, and a locking means being provided in the area of the horns for fixing the runners in the moving position of the sled, characterized in that the horns (4) are brought together at their highest points and/or each horn (4) is guided directly to a seat bar (2) located on the same side of the sled (1a, 1b, 1c), and the locking means (8, 8a, 9) is provided there.

2. The luge of claim 1, characterized in that a hinge joint (8, 8a) is provided at the highest point of the horns (4) brought together.

3. The luge of claim 2, characterized in that the axis of the joint (8, 8a) is located between the horns (4) above the axis (11) of the universal joint connection (6) and parallel thereto.

4. The luge of claim 2 or 3, characterized in that the joint between the horns (4) is a hinge (8).

5. The luge of claim 2 or 3, characterized in that the joint between the horns (4) is a spring band (8a).

6. The luge of claim 1, characterized in that the locking means (9) between the horns (4) and the seat bars (2) is a detachable connection.

7. The luge of claim 6, characterized in that the locking means (9) has a spring-supported locking bolt (26, 27, 28) between the horns (4) and the seat bars (2).

## Revendications

1. Luge pliable à deux patins recourbés formant cornes vers le haut dans la partie avant de la luge, comportant deux longerons de siège parallèles aux patins et un assemblage en croisillon entre les longerons de siège et les patins, les patins étant reliés de manière pivotante aux extrémités de l'assemblage articulé en croisillon et un dispositif d'arrêt étant prévu dans la zone des patins formant cornes pour fixer les patins en position de glissement de la luge, caractérisée en ce que les patins formant cornes (4) sont reliés à leurs points les plus élevés et/ou chaque patin formant corne (4) est guidé directement vers un longeron de siège (2) situé sur le même côté de la luge (1a, 1b, 1c) et en ce qu'il y est prévu le dispositif d'arrêt (8, 8a, 9).

2. Luge selon la revendication 1, caractérisée en ce qu'au point le plus élevé des patins formant cornes réunis (4), il est prévu un assemblage articulé (8, 8a).

3. Luge selon la revendication 2, caractérisée en ce que l'axe articulé de l'articulation (8, 8a) est situé entre les patins formant cornes (4) au-dessus de l'axe (13) de l'assemblage articulé en croisillon (6) et parallèlement à celui-ci.

4. Luge selon la revendication 2 ou 3, caractérisée en ce que l'articulation entre les patins formant cornes (4) est une charnière (8).

5. Luge selon la revendication 2 ou 3, caractérisée en ce que l'articulation entre les patins formant cornes (4) est un ressort en acier feuillard (8a).

6. Luge selon la revendication 1, caractérisée en ce que le dispositif d'arrêt (9) entre les patins formant cornes (4) et les longerons de siège (2) est un assemblage amovible.

7. Luge selon la revendication 6, caractérisé en ce que le dispositif d'arrêt (9) présente un boulon d'assemblage (26, 27, 28) à ressort entre les patins formant cornes (4) et les longerons de siège (2).

FIG. 1a

FIG. 1b

FIG. 1c

FIG. 2a

FIG. 2b

FIG. 3a

FIG. 3b

FIG. 4 V

FIG. 5

FIG. 6

FIG. 7a

FIG. 7b